# FASCICULE DE BREVET EUROPEEN

(11) **EP 3 645 252 B1**
(45) Date de publication et mention de la délivrance du brevet: **10.12.2025**
(21) Numéro de dépôt: 18731457.0
(22) Date de dépôt: 19.06.2018
(51) Int. Cl.: B29C 70/08, F16L 11/02, F16L 11/24, F16L 58/16, F16L 11/16, D07B 5/04, B29C 70/22, F16L 9/04, B29C 70/54, B29K 105/00

(54) **ARMURE POUR CONDUITE FLEXIBLE COMPORTANT UN PROFILE COMPOSITE UNIDIRECTIONNEL ET UN RUBAN DE RENFORT**
ARMIERUNG FÜR FLEXIBLES ROHR MIT EINEM EINWEGKOMPOSITPROFILABSCHNITT UND EINEM VERSTÄRKUNGSSTREIFEN
ARMOUR FOR FLEXIBLE PIPE COMPRISING A ONE-WAY COMPOSITE PROFILE SECTION AND A REINFORCING STRIP

(30) Priorité: 30.06.2017 FR 1756144
(43) Date de publication de la demande: 06.05.2020
(73) Titulaire: IFP Energies nouvelles, 92852 Rueil-Malmaison (FR)
(72) Inventeur: MARTINEZ, Michael, 69360 Saint Symphorien d'Ozon (FR); DAMIENS, Alexandre, 76560 Berville-en-Caux (FR); MAURICE, Julien, 76480 Duclair (FR); GROSJEAN, François, 39390 Charly (FR); CALEYRON, Fabien, 69540 Irigny (FR)
(74) Mandataire: IFP Energies nouvelles
(86) Numéro de dépôt international: PCT/EP2018/066249
(87) Numéro de publication internationale: WO 2019/002024

(56) Documents cités:
- EP-A1- 1 066 485
- N.N.: "CFK Carbon Platten 1,5mm, Hightec-Line | carbon-shop.at", 1 January 2014 (2014-01-01), XP055459043, Retrieved from the Internet <URL:http://www.carbon-shop.at/produkt/cfk-carbon-platten-1mm-hightec-line#.WqfweGfdcSk> [retrieved on 20180313]

## Description

La présente invention concerne les couches de renfort aux efforts de traction longitudinaux (appelés généralement armures) pour une conduite tubulaire flexible, pour le transport de fluides pétroliers. La conduite flexible peut être utilisée dans le domaine de l'exploitation pétrolière en mer.

Les conduites flexibles visées par la présente invention sont formées d'un ensemble de différentes couches concentriques et superposées, et sont dites de type non lié (« unbonded » en anglais) car ces couches présentent une certaine liberté de déplacement les unes par rapport aux autres lors d'un effort de flexion des conduites flexibles. Ces conduites flexibles satisfont entre autres aux recommandations des documents normatifs API 17J « Specification for Unbonded Flexible Pipe » (4ème édition, Mai 2014) et API 17B « Recommended Practice for Flexible Pipe » (5ème édition, Mai 2014) publiés par l'American Petroleum Institute. Les couches constitutives des conduites flexibles comprennent notamment des gaines polymériques assurant généralement une fonction d'étanchéité, et des couches de renfort destinées à la reprise des efforts mécaniques et formées par des enroulements de feuillard métallique, de fils métalliques, de bandes diverses ou de profilés en matériaux composites.

Ces conduites flexibles sont notamment utilisées pour transporter des hydrocarbures de type pétrole ou gaz depuis un équipement sous-marin situé sur le fond marin, par exemple une tête de puits, jusqu'à une unité flottante de production située à la surface. De telles conduites peuvent être déployées à grande profondeur, couramment à plus de 2000m de profondeur, et elles doivent donc être capables de résister à une pression hydrostatique de plusieurs centaines de bar. En outre, elles doivent aussi pouvoir résister à la pression très élevée des hydrocarbures transportés, cette pression pouvant elle aussi être de plusieurs centaines de bar.

Lorsque la conduite flexible est en service, elle peut être soumise à de fortes charges statiques et dynamiques, ce qui peut engendrer un phénomène de fatigue. Les chargements les plus sévères sont généralement observés dans la partie supérieure des conduites montantes (« risers » en langue anglaise) reliant le fond marin à la surface. En effet, dans cette zone, la conduite flexible est soumise à une forte contrainte statique en tension liée au poids de la conduite, à laquelle s'additionnent des contraintes dynamiques en tension et en flexion transverse liées aux mouvements de l'unité flottante de production sous l'effet de la houle et des vagues. S'agissant de la partie de la conduite flexible s'étendant sur le fond marin (« flowlines » en langue anglaise), les charges appliquées sont essentiellement statiques.

Les conduites flexibles de type non lié les plus utilisées dans l'industrie pétrolière offshore comprennent généralement, de l'intérieur vers l'extérieur, une carcasse interne constituée d'un feuillard en acier inoxydable profilé et enroulé hélicoïdalement à pas court en spires agrafées les unes aux autres, ladite carcasse interne servant principalement à empêcher l'écrasement de la conduite flexible sous l'effet de la pression externe, une gaine interne d'étanchéité en polymère, une voûte de pression constituée d'au moins un fil métallique de forme agrafé et enroulé hélicoïdalement à pas court, ladite voûte de pression servant à reprendre les efforts radiaux liés à la pression interne, des nappes d'armures de traction formées d'enroulements hélicoïdaux à pas long de fils métalliques ou profilés composites, lesdites nappes d'armures de traction étant destinées à reprendre les efforts longitudinaux que subit la conduite flexible, et enfin une gaine externe d'étanchéité destinée à protéger de l'eau de mer les couches de renfort. Dans la présente demande, on entend par enroulement à pas court tout enroulement ayant un angle d'hélice dont la valeur absolue est proche de 90 degrés, en pratique compris entre 70 degrés et 90 degrés par rapport à l'axe longitudinal de la conduite flexible. Le terme enroulement à pas long désigne quant à lui tout enroulement dont l'angle d'hélice est inférieur ou égal, en valeur absolue, à 55 degrés par rapport à l'axe longitudinal de la conduite flexible.

La carcasse interne permet à la conduite flexible d'avoir une résistance à l'écrasement (« collapse » en anglais) suffisante pour lui permettre de résister à de fortes pressions externes, notamment la pression hydrostatique lorsque la conduite flexible est immergée à grande profondeur (1000m, voire 2000m, ou plus), ou encore les pressions externes de contact subies pendant les opérations de manutention et d'installation en mer. Une conduite flexible comportant une carcasse interne est dite à passage non lisse (« rough bore » en anglais) car l'élément le plus intérieur est la carcasse interne qui forme un passage non lisse, en raison des déjoints entre les spires métalliques du feuillard agrafé.

La voûte de pression a pour fonction principale de permettre à la gaine interne d'étanchéité de résister, sans éclater, à la pression exercée par le fluide pétrolier transporté par la conduite, la face externe de la gaine interne d'étanchéité prenant appui contre la face interne de la voûte de pression. La voûte de pression contribue aussi à améliorer la résistance à l'écrasement de la carcasse interne, notamment car elle limite les possibilités de déformation de la carcasse interne sous l'effet de la pression hydrostatique.

La fonction principale des nappes d'armures de traction est de reprendre les efforts longitudinaux, notamment ceux liés au poids pendu de la conduite flexible lorsque celle-ci est installée sur le fond marin à partir d'un bateau de pose situé à la surface. Dans le cas d'une conduite montante (« riser » en anglais) reliant de façon permanente une installation posée sur le fond marin à un équipement flottant à la surface, ces efforts longitudinaux liés au poids pendu sont exercés en permanence. Lorsque la conduite est immergée à grande profondeur, les efforts longitudinaux liés au poids pendu lors de l'installation et/ou en service peuvent atteindre plusieurs centaines de tonnes.

Les nappes d'armures de traction sont généralement réalisées en métal ou en un matériau composite. Les armures de traction métalliques utilisées traditionnellement pour le renforcement axial des conduites flexibles posent un problème de poids par grande profondeur. En effet, selon l'application visée, il peut exister une profondeur au-delà de laquelle, l'augmentation de la section des armures en acier augmente le poids propre de la ligne plus qu'elle n'augmente la résistance axiale de la conduite flexible. Le chargement en tête du riser en production ou de la flowline à l'installation dépasse alors sa capacité. L'installation de la ligne devient alors impossible du fait que le poids pendu est supérieur à la capacité limite de reprise des efforts des équipements de pose.

Depuis quelques années, des travaux sont menés pour remplacer ces fils métalliques par des profilés en matériaux composites qui ont l'avantage d'avoir une densité, donc une masse, beaucoup plus faible que les métaux. Ces profilés en matériaux composites doivent satisfaire entre autres aux recommandations du document normatif DNV-OS-C501 « Composite Components » (Novembre 2013) publié par le Det Norske Veritas. La diminution de masse obtenue sur les structures flexibles a de nombreuses conséquences : elle permet, avec le même bateau d'installation, d'installer des flexibles par plus grande profondeur ; elle permet aussi d'utiliser des bateaux d'installation de moindre capacité de pose, avec potentiellement des coûts d'installation réduits ; enfin, la diminution de la masse des flexibles utilisés en tant que riser (lignes reliant le fond de la mer à l'unité de surface flottante) peut avoir des effets sur le dimensionnement des unités flottantes. En revanche, les armures de traction composites ont une résistance en compression plus faible que les armures de traction métalliques, ce qui pose un problème pour les chargements au fond de la mer, dominés par une pression externe importante.

Les matériaux composites dont il est question pour l'application armures longitudinales sont constitués de fibres de renforts continues (typiquement fibres de carbone, de verre, d'aramide...) noyées dans une résine polymère (thermodurcissable, thermoplastique...). Les travaux actuels portent principalement sur un matériau composite à fibre de carbone avec une matrice thermodurcissable de type époxyde, mais ceci n'est pas exclusif.

Même s'il est possible d'envisager d'autres procédés de fabrication pour ce type de matériau, celui qui a été retenu pour la fabrication des armures composites est la pultrusion qui permet de produire facilement un produit de très grande longueur avec les fibres orientées dans le sens longitudinal afin d'obtenir la résistance la plus importante dans ce sens. Lorsqu'il n'y a que des fibres orientées dans le sens longitudinal, on parle d'un composite unidirectionnel.

L'avantage des composites unidirectionnels est leur très grande résistance mécanique dans le sens des fibres, mais a contrario, leur inconvénient est leur faible résistance transverse. En effet, bien que sollicitée principalement dans le sens longitudinal, les armures des conduites flexibles subissent également des efforts dans les directions transverses (flexion transverse, compression dans l'épaisseur du profilé composite et torsion du profilé composite) aussi bien au moment de la fabrication du flexible lors de l'étape d'armage du fil d'armure, qu'ensuite en service.

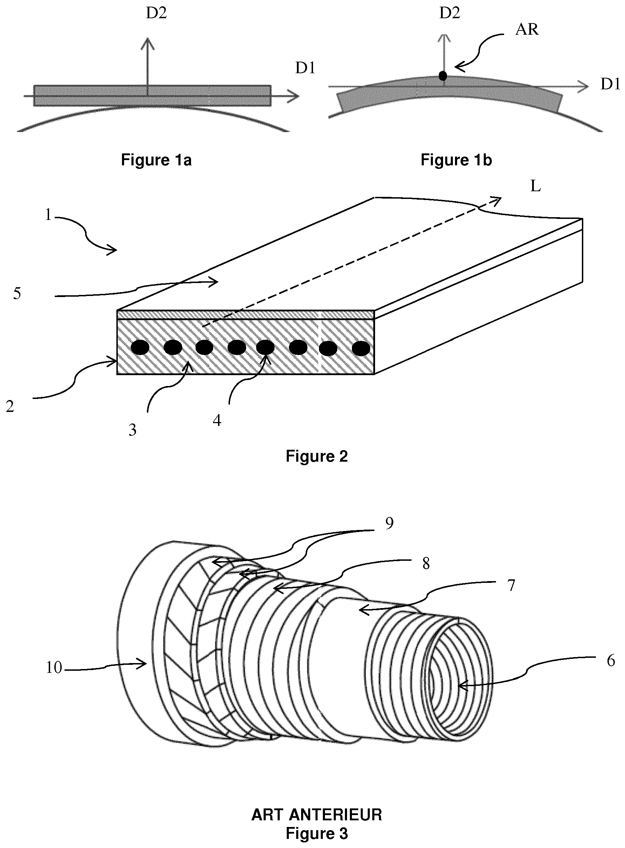

Les efforts transverses subis par les armures peuvent se traduire par des fissures longitudinales, notamment lors du plaquage du profilé composite sur le flexible lors du chargement. En effet, les chargements transverses sollicitent uniquement la matrice en résine polymère qui a une élongation à rupture faible. Les figures 1a et 1b illustrent respectivement la configuration initiale du profilé composite unidirectionnelle et le plaquage du profilé composite unidirectionnelle sur la conduite flexible lors du chargement. Sur ces figures, la référence D2 indique la direction de plaquage du fil d'armure et la référence D1, une direction transversale. Pour un tel profilé, une amorce à la rupture AR peut se former lors du plaquage du profilé sur la conduite flexible, notamment au niveau de la surface extérieure de l'armure.

Le brevet EP 1066485 (équivalent WO 99/49259) propose une solution pour résoudre ce risque de fissuration transverse par ajout d'un film sur au moins une face du profilé composite formant l'armure. Ce film, appelé aussi mat, est une couche de fibres non tissées qui a l'avantage de ne pas avoir de direction de renforcement privilégiée ainsi qu'un taux volumique de fibres faible. Le mat est rajouté sur au moins une des faces de l'armure afin de la renforcer mécaniquement vis-à-vis des contraintes en flexion et torsion qu'elle voit au cours de l'étape d'armage, lors de la fabrication de la conduite flexible. En outre, le mat permet d'améliorer la résistance de l'armure par rapport au phénomène d'abrasion entre profilés. Pour des questions de résistance à l'abrasion améliorée mais également de coût, les mats utilisés jusqu'à présent ont été fabriqués à base de fibres d'aramide.

Deux limitations existent à l'utilisation de couches de mat pour renforcer dans les directions transverses les composites unidirectionnels :
- le taux de fibres étant faible et celles-ci étant aléatoirement orientées, l'effet de renforcement par cette couche est faible, et elle est d'autant plus faible que l'épaisseur du profilé est importante, et
- les fibres d'aramide étant hygroscopiques, l'environnement de l'annulaire des flexibles (présence d'eau, de gaz, de températures élevées) peut conduire à une dégradation des propriétés de cette couche en service.

Afin de pallier ces inconvénients, la présente invention concerne une armure composite pour conduite flexible. L'armure comporte un profilé composite et un ruban de renfort. Le profilé composite est formé de fibres de renfort orientées longitudinalement et noyées dans une matrice en résine polymère. Le ruban de renfort est quant à lui formé par un ruban tissé comprenant des fibres imprégnées dans un matériau polymère, de telle sorte que le fil de trame du ruban de renfort est orthogonal à la direction longitudinale du profilé, et que le fil de chaîne du ruban est parallèle à la direction longitudinale du profilé. Ainsi, le ruban de renfort comprenant des fibres selon ces directions permet d'améliorer le comportement transverse de l'armure et d'éviter les amorces de rupture, tout en garantissant des propriétés mécaniques (notamment la résistance longitudinale et la résistance transversale), un encombrement et une masse adaptés pour les contraintes de fabrication et d'utilisation d'une conduite flexible.

### Le dispositif selon l'invention

L'invention concerne une armure pour conduite flexible comportant un profilé composite et au moins un ruban de renfort, ledit profilé composite étant constitué de fibres de renfort continues noyées dans une résine polymère, ledit profilé composite ayant une section sensiblement rectangulaire, et ledit ruban de renfort étant solidarisé sur au moins une face dudit profilé composite. Ledit ruban de renfort est un ruban tissé comprenant des fibres imprégnées dans un matériau polymère, ledit ruban de renfort étant formé de telle sorte que le fil de trame dudit ruban de renfort est sensiblement perpendiculaire à la direction longitudinale dudit profilé composite, et de telle sorte que le fil de chaîne dudit ruban de renfort est sensiblement parallèle à la direction longitudinale dudit profilé composite.

Avantageusement, de 50 à 90 %, et de préférence de 60 à 80 %, desdites fibres dudit ruban de renfort sont incluses dans ledit fil de chaîne dudit ruban de renfort.

De manière avantageuse, le taux volumique de fibres dudit ruban de renfort est supérieur à 40 %, et vaut de préférence 60 %.

Selon un mode de réalisation, lesdites fibres dudit ruban de renfort sont des fibres de carbone.

Conformément à une mise en œuvre, l'épaisseur dudit ruban de renfort est compris entre 5 et 50 % de l'épaisseur de ladite armure, de préférence entre 10 et 30 % de l'épaisseur de ladite armure.

Selon un aspect, ladite armure comporte un ruban de renfort disposé sur la face supérieure dudit profilé composite.

Conformément à une caractéristique, ladite armure comporte deux rubans de renfort disposés sur les faces supérieure et inférieure dudit profilé composite.

Selon une option de réalisation, ledit ruban de renfort est solidarisé sur ledit profilé composite par gainage, par collage, ou par stratification simultanée avec ladite résine polymère dudit profilé lors de la fabrication dudit profilé composite.

Conformément à une mise en œuvre, ladite armure possède une raideur longitudinale supérieure à 70 % de celle de l'armure unidirectionnelle de référence et de préférence supérieure à 80%.

De préférence, le taux volumique de fibres dudit profilé composite est compris entre 50 et 80 %.

Selon un mode de réalisation, lesdites fibres dudit profilé composite sont orientées uniquement selon la direction longitudinale dudit profilé composite.

En outre, l'invention concerne une conduite flexible pour transporter un effluent pétrolier, ladite conduite flexible comportant au moins une gaine de pression et au moins une nappe d'armures de traction comprenant des armures selon l'une des caractéristiques précédentes, ladite nappe d'armures étant placée à l'extérieur de ladite gaine de pression.

### Présentation succincte des figures

D'autres caractéristiques et avantages de l'armure composite selon l'invention, apparaîtront à la lecture de la description ci-après d'exemples non limitatifs de réalisations, en se référant aux figures annexées et décrites ci-après.
Les figures 1a et 1b, déjà décrites, illustrent respectivement la configuration initiale du profilé composite unidirectionnelle et le plaquage du profilé composite unidirectionnelle sur une conduite flexible lors du chargement.
La figure 2 illustre une armure selon un mode de réalisation de l'invention.
La figure 3 illustre une conduite flexible comprenant une armure selon l'invention.

### Description détaillée de l'invention

La présente invention concerne une armure pour conduite flexible, notamment une armure de résistance aux efforts de traction ou armures de traction. L'armure comporte un profilé composite et au moins un ruban de renfort. On appelle armure un élément plat dont la longueur est très grande par rapport aux autres dimensions : largeur et épaisseur. L'armure peut avoir une section sensiblement rectangulaire. Le profilé composite est également un élément plat dont la longueur est très grande par rapport aux autres dimensions. Le profilé composite peut avoir une section sensiblement rectangulaire. Selon l'invention, le profilé composite peut être un profilé composite unidirectionnel : le profilé composite est constitué de fils ou mèches comprenant un ensemble de fibres de renfort continues noyées dans une résine polymère, les mèches de fibres de renfort étant orientées uniquement selon la direction longitudinale du profilé. Grâce au composite unidirectionnel, le profilé composite, et a fortiori l'armure, possède une grande résistance mécanique dans le sens des fibres, c'est-à-dire dans la direction longitudinale de l'armure.

Selon l'invention, le ruban de renfort est solidarisé sur au moins une face du profilé composite. Avantageusement, le ruban de renfort peut également être un élément plat dont la longueur est très grande par rapport aux autres dimensions. Le ruban de renfort peut avoir une section sensiblement rectangulaire. Le ruban de renfort est un ruban tissé comprenant des fibres continues assemblées en fils ou mèches, imprégnées dans un matériau polymère. Selon l'invention, le ruban de renfort est formé de telle sorte que le fil de trame du ruban de renfort est sensiblement perpendiculaire à la direction longitudinale du profilé composite (en d'autres termes, le fil de trame du ruban de renfort est parallèle à la largeur de l'armure), et de telle sorte que le fil de chaîne du ruban de renfort est sensiblement parallèle à la direction longitudinale du profilé composite (en d'autres termes, le fil de chaîne est parallèle à la longueur de l'armure). Le fil de trame est un fil d'un tissu orienté dans le sens de la largeur du tissu (donc du ruban de renfort). Son opposé est le fil de chaîne orienté dans la longueur du tissu (donc du ruban de renfort). C'est l'entrecroisement de ces deux fils qui donne un tissu. Une telle conception du ruban de renfort permet d'avoir des fibres dans la direction longitudinale et dans la direction transverse, ce qui permet d'améliorer le comportement transverse de l'armure, et d'éviter les amorces de rupture, tout en conservant une grande résistance mécanique selon la direction longitudinale de l'armure. Le ruban de renfort recouvre de préférence toute la largeur du profilé composite. En outre, le ruban de renfort peut s'étendre sur sensiblement toute la longueur du profilé composite.

Afin d'optimiser la résistance transversale de l'armure, la répartition des fibres dans le ruban de renfort peut être la suivante :
- de 50 à 90 %, et de préférence de 60 à 80 % des fibres du ruban de renfort sont incluses dans le fil de chaîne du ruban de renfort, et
- de 10 à 50 %, et de préférence de 20 à 40 % des fibres du ruban de renfort sont incluses dans le fil de trame du ruban de renfort.

Une faible valeur de répartition des fibres dans le fil de chaîne du ruban de renfort est plus efficace en termes de renforcement transversal de l'armure. Toutefois, le tissage du ruban est plus difficile et plus long à réaliser, et devient donc peu économique.

L'épaisseur du ruban de renfort peut varier jusqu'à quasiment l'épaisseur totale de l'armure si on choisit de renforcer l'intégralité de l'armure dans le sens transverse, mais on peut choisir préférentiellement de mettre un ruban sur une partie seulement de l'épaisseur de l'armure. Selon un mode de réalisation, l'épaisseur du ruban de renfort peut représenter de 5% à 50% de l'épaisseur totale de l'armure, et de préférence, l'épaisseur du ruban de renfort représente de 10% à 30% de l'épaisseur totale de l'armure, afin d'optimiser l'utilisation de ruban unidirectionnel, notamment pour la résistance longitudinale et pour des questions de coût de l'armure. Dans un autre mode de réalisation de l'invention, l'épaisseur totale du ruban de renfort est sensiblement égale à l'épaisseur de l'armure et est formé par la superposition de plusieurs couches d'épaisseur inférieure à l'épaisseur totale dudit ruban, de sorte que la somme des épaisseurs desdites couches soit sensiblement égale à l'épaisseur de l'armure. Cette superposition de couches peut être vue comme une superposition de plusieurs rubans de renfort de faible épaisseur, par exemple de quelques microns. Par exemple, la superposition comprend entre une et dix couches, de préférence entre deux et cinq couches.

Selon une caractéristique de l'invention, l'armure renforcée par un ruban de renfort peut posséder une raideur longitudinale supérieure à 70 % de celle de l'armure unidirectionnelle de référence et de préférence supérieure à 80%, pour obtenir des bonnes propriétés mécaniques dans la direction longitudinale de l'armure. On appelle raideur la caractéristique qui indique la résistance à la déformation élastique d'un corps. Pour cela, l'épaisseur du ruban de renfort et la répartition des fibres selon la direction du fil de chaîne peuvent être choisies afin d'optimiser les propriétés mécaniques dans la direction longitudinale de l'armure, tout en la renforçant significativement dans la direction transverse.

Selon un mode de réalisation de l'invention, le taux volumique de fibres du ruban de renfort peut être supérieur à 40 %, de préférence peut être compris entre 55 et 65 %, et peut être de manière très préférée sensiblement égal à 60 %. On appelle taux volumique de fibres, le rapport du volume occupé par les fibres sur le volume total du ruban de renfort. Un tel taux volumique de fibres dans le ruban de renfort permet d'obtenir de bonnes propriétés mécaniques et permet que le ruban de renfort conserve une fonction protectrice et de transfert de charge. En particulier, pour un taux volumique de fibres égal à 60 %, un bon compromis entre les propriétés mécaniques et la fonction protectrice du ruban de renfort est obtenu.

Conformément à une réalisation de l'invention, les fibres du ruban de renfort peuvent être des fibres de verre, d'aramide, de carbone, de polyéthylène haut module, etc. Par exemple, la fibre de verre permet d'isoler le carbone, et d'éviter le couplage avec les aciers, donc la corrosion galvanique. La fibre d'aramide permet aussi l'isolation électrique, et donne à l'armure des propriétés tribologiques élevées. De préférence, les fibres du ruban de renfort peuvent être des fibres de carbone pour des raisons d'inertie chimique, notamment dans l'application pour les conduites flexibles, pour ses bonnes propriétés mécaniques spécifiques (rapportées à sa masse volumique), ainsi que pour des raisons économiques. De plus, les fibres de carbone permettent d'éviter les problèmes de dégradation qui peuvent exister pour les fibres d'aramide, notamment de dégradation hygrothermique.

De préférence, les mèches (ou fils) formées par l'assemblage de fibres, du ruban de renfort, ont des diamètres différents. Le diamètre de la mèche dépend du nombre de fibres qui la compose. Typiquement, une mèche comprend plusieurs milliers de fibres, ce nombre de fibres étant symbolisé par le nombre de K. Par exemple, une mèche composée de 12000 fibres est dite « 12K ».

Dans la présente invention, le diamètre des mèches peut par exemple varier entre 1K et 48K, de préférence entre 3K et 12K. Ainsi, les différents couples « fils de chaine / fils de trame » (ou « fils de trame / fils de chaine ») envisageables pour la réalisation du ruban de renfort sont par exemple du type « 3K / 3K », « 3K / 6K », « 3K / 12K », « 6K / 6K », « 6K / 12K » et « 12K / 12K ».

Avantageusement, on choisit un fil de trame de diamètre maximal égal à 6K afin de faciliter le tissage du ruban de renfort.

Le matériau polymère du ruban de renfort, dans lequel sont imprégnées les fibres peut être choisi parmi un matériau polymère thermoplastique ou thermodurcissable. Selon un exemple de réalisation, le matériau polymère peut être une résine de type thermodurcissable comme une résine époxyde, vinylester, cyanate, etc. ou une résine de type thermoplastique comme un polyoléfine, un polyamide, un polymère fluoré, un polyarylèthercétone (PAEK), un polysulfure de phénylène (PPS), etc. De manière privilégiée, le matériau polymère choisi pour le ruban de renfort peut être le même que celui de la résine polymère du profilé composite unidirectionnel, ce qui améliore la cohésion de l'ensemble. Avantageusement, dans le mode de réalisation d'un ruban de renfort formé par la superposition de plusieurs couches, on choisit le même matériau polymère pour chacune des couches afin d'améliorer la cohésion entre elles.

Le profilé composite peut être constitué de fibres de renforts continues choisis parmi les fibres de carbone, de verre, d'aramide, noyés dans une résine polymère, notamment thermodurcissable ou thermoplastique, en particulier une résine époxyde, vinylester, cyanate, etc. ou une résine de type thermoplastique comme un polyoléfine, un polyamide, un polymère fluoré, un polyarylèthercétone (PAEK), un polysulfure de phénylène (PPS), etc.

Le taux volumique de fibres au sein du profilé composite peut être compris entre 50 et 80 %. Ce taux volumique de fibres dans le profilé composite permet de répondre aux contraintes imposées par les conduites flexibles, en particulier en termes de résistance longitudinale.

Selon un mode de réalisation de l'invention, l'armure de traction comporte deux rubans de renfort solidarisés sur les faces supérieure et inférieure du profilé composite. Ainsi, une armure tri-couches est formée, cette armure tri-couches assure une symétrie de l'armure, et ne nécessite pas de précaution particulière lors de la pose pour s'assurer que l'armure soit dans le bon sens.

Lorsque l'armure comporte un seul ruban de renfort (armure bi-couches), le ruban de renfort est solidarisé sur la face supérieure du profilé composite. Cette réalisation avec un seul ruban de renfort permet une réalisation simplifiée de l'armure et permet de renforcer uniquement la face du profilé composite qui est susceptible de présenter une amorce de rupture (cf. figure 1b).

Selon un mode de réalisation de l'invention, un ruban de renfort peut être solidarisé sur au moins une face latérale (ou les deux faces latérales) du profilé composite. Cette structure permet une protection mécanique du profilé composite vis-à-vis du phénomène d'usure qui peut avoir lieu entre les différents profilés composite formant la nappe d'armure de traction.

Conformément à une mise en œuvre de l'invention, le ruban de renfort est solidarisé sur le profilé composite par gainage, par collage ou par stratification simultanée avec la résine polymère du profilé composite lors de la fabrication du profilé composite. De préférence, la solidarisation entre le ruban de renfort et le profilé composite est réalisée par stratification simultanée des différentes couches consécutives afin d'optimiser la cohésion des différentes couches.

Avantageusement, dans le mode de réalisation de l'invention selon laquelle le ruban de renfort est formé par la superposition de plusieurs couches, la mise en œuvre du ruban est également réalisée par stratification simultanée.

La figure 2 illustre, de manière schématique et non limitative, une amure de traction selon un mode de réalisation de l'invention. La figure 2 est une vue tridimensionnelle et partielle (car toute la longueur de l'armure n'est pas représentée) d'une armure 1. L'amure 1 possède une section sensiblement rectangulaire. L'armure 1 comporte un profilé composite 2 et un ruban de renfort 5. Le profilé composite 2 et le ruban de renfort 5 ont des sections sensiblement rectangulaires. Le profilé composite 2 est un profilé composite unidirectionnel, dont les fibres 4 sont orientées uniquement longitudinalement, c'est-à-dire selon la direction longitudinale L de l'armure 1. Les fibres 4 sont noyées dans une résine polymère 3. Le ruban de renfort 5 est solidarisé sur la face supérieure du profilé composite 2. Le ruban de renfort 5 comprend des fibres imprégnées dans un matériau polymère. Le ruban de renfort 2 est formé de telle sorte que le fil de trame du ruban de renfort 5 est sensiblement perpendiculaire à la direction longitudinale L du profilé composite 2, et de telle sorte que le fil de chaîne du ruban de renfort 5 est parallèle à la direction longitudinale du profilé composite 2. Le ruban de renfort 5 recouvre toute la longueur et la largeur du profilé composite 2.

D'autres alternatives de réalisation peuvent être prévues. Par exemple, l'armure 1 peut comporter un deuxième ruban de renfort 5 solidarisé sur la face inférieure du profilé composite 2.

Une conduite flexible selon l'art antérieur est représentée, de manière schématique et non limitative, par la figure 3. Cette conduite est constituée de plusieurs couches décrites ci-après de l'intérieur vers l'extérieur de la conduite. La conduite flexible est de type non lié (« unbonded » en anglais) et répond aux spécifications définies dans le document normatif API 17J.

La carcasse interne 6 est constituée d'un feuillard métallique enroulée en hélice à pas court. Elle est destinée à la résistance à l'écrasement sous l'effet de la pression externe appliquée à la conduite.

La gaine interne d'étanchéité 7 est réalisée par extrusion d'un matériau polymère, en général choisi parmi les polyoléfines, les polyamides et les polymères fluorés.

La voûte de pression 8 réalisée en fils métalliques agrafés ou emboîtables assure la résistance à la pression interne dans la conduite.

Selon l'illustration de la figure 3, les nappes d'armures de traction 9 sont constituées par des fils (armures) enroulés en hélice selon des angles dont la valeur absolue par rapport à l'axe longitudinal de la conduite flexible est comprise entre 20 degrés et 55 degrés. La conduite comporte avantageusement deux nappes superposées et croisées d'armures de traction 9, comme représenté sur la figure 3. Par exemple, si la nappe interne d'armures de traction est enroulée avec un angle d'hélice égal à 30 degrés, la nappe externe d'armures de traction est enroulée avec un angle d'hélice égal à -30 degrés. Cette symétrie angulaire permet d'équilibrer la conduite en torsion, de façon à réduire sa tendance à tourner sous l'effet d'un effort de traction.

Lorsque les deux nappes superposées et croisées d'armure de traction 9 sont enroulées avec un angle d'hélice sensiblement égal à 55 degrés, la voûte de pression 3 peut optionnellement être supprimée car l'angle d'hélice de 55 degrés confère aux nappes d'armure de traction 4 une bonne résistance à la pression interne.

La gaine externe d'étanchéité 10 également réalisée par extrusion d'un matériau polymère forme une protection externe de la conduite.

La conduite représentée par la figure 3 est du type "rough bore", c'est-à-dire que le fluide en circulation dans la conduite est en contact avec la carcasse interne 6.

Alternativement, la conduite peut être du type "smooth bore". Dans ce cas, la conduite représentée par la figure 3 ne comporte pas de carcasse interne 6. La gaine polymère 7 est directement en contact avec le fluide en circulation dans la conduite. La gaine polymère 10 est étanche. Les efforts de pression externe sont supportés par la voûte 8.

L'invention concerne en outre une conduite flexible, qui comporte au moins une gaine de pression et au moins un élément de renfort mécanique. Dans la présente demande, le terme « élément de renfort mécanique » désigne l'ensemble des nappes d'armures utilisées pour reprendre les efforts longitudinaux de la conduite flexible. Selon l'invention, la conduite flexible comporte au moins une nappe d'armures comprenant des armures composites telles que décrites précédemment. De plus, la conduite flexible selon l'invention peut avantageusement comporter au moins une des autres couches de la conduite flexible décrites en référence à la figure 3, notamment une carcasse interne, une gaine externe d'étanchéité, une voûte de pression et/ou d'autres couches supplémentaires. De préférence, la conduite flexible selon l'invention est de type non lié (« unbonded » en anglais) et répond aux spécifications définies dans le document normatif API 17J.

L'utilisation d'armures composites selon l'invention permet d'alléger la conduite flexible par rapport aux armures métalliques. En outre, la résistance longitudinale et transverse des armures composites selon l'invention, permettent d'éviter la rupture et la dégradation des armures lors de leur utilisation.

La présente invention est adaptée pour les conduites flexibles de type « riser », pour les conduites flexibles de type « flowline » ainsi que pour les conduites flexibles de type « oil offloading line » (OOL) qui permettent le déchargement de fluides pétroliers entre une unité flottante de stockage, production, déchargement (FPSO pour « Floating Production Storage & Offloading ») et une bouée de déchargement.

L'invention est particulièrement adaptée à une conduite flexible pour les grandes profondeurs, pour laquelle la tension en tête de la conduite est le chargement le plus sévère pour le dimensionnement des armures.

### Exemple d'application

Les caractéristiques et avantages de l'armure selon l'invention apparaîtront plus clairement à la lecture de l'exemple d'application ci-après.

La principale application visée pour l'invention est une armure pour conduite flexible destiné au transport d'effluent pétrolier. Cette conduite flexible peut traverser une tranche d'eau, en liant des installations de fond (puits) et une plateforme de surface (une telle conduite flexible est appelée « riser »). En mer profonde, cette conduite est soumise à de fortes contraintes mécaniques, due à son poids et aux mouvements de la plateforme qui est dans ce cas toujours flottante. Alléger cette conduite permet de réduire les contraintes qui lui sont appliquées mais aussi de réduire le poids suspendu que doit supporter la plateforme. Il y a des cas où les dimensions de la conduite flexible et la profondeur d'eau sont telles que seul une conduite flexible à armures composites peut être envisagée, par exemple le « top riser » (c'est-à-dire la portion supérieure de la conduite flexible). Pour cet exemple, il s'agit d'une conduite flexible de diamètre interne 9" (environ 228,6 mm) dimensionnée pour une pression interne en fonctionnement de 553 bars (environ 55,3 MPa) et d'une tranche d'eau de 2 140 m.

Les chargements critiques que doit supporter le « top riser » correspond au chargement en tête (connexion avec la plateforme) et le chargement en pied (connexion avec le « bottom riser », c'est-à-dire la portion inférieure de la conduite flexible). Le chargement en tête additionne la pression interne (ligne en production), la tension due au poids suspendu et la flexion due au mouvement de la plateforme, ces deux dernières n'étant pas constantes. Le chargement en pied additionne la pression externe (ligne dépressurisée) et la tension due au poids du « bottom riser », la somme des deux mettant les armures en compression, à cause de l'effet de fond inverse.

La solution proposée par l'art antérieur pour ce cas est un flexible avec 4 nappes d'armures composites unidirectionnelles de section 14 x 1.65 mm, avec un taux volumique de fibres Vf = 68%. Deux nouvelles structures d'armures selon l'invention sont ici proposées (section 14 x 2.08 mm, Vf = 60 % pour le ruban de renfort et le profilé composite) :
- exemple 1 (non-conforme à l'invention) : un ruban de renfort, avec une répartition des fibres dans le fil de chaîne k = 0.89 (89 %),
- exemple 2 (conforme à l'invention) : un tri-couches composé successivement d'un premier ruban de renfort avec k = 0.7, d'un profilé composite, et d'un deuxième ruban de renfort avec k = 0.7, les épaisseurs respectives des trois couches étant 0.39, 1.30, et 0.39 mm
- exemple 3 (conforme à l'invention) : un bi-couches composé successivement d'un profilé composite, et d'un ruban de renfort avec k = 0.7, les épaisseurs respectives étant de 1.30 et 0.78 mm, et le ruban de renfort étant placé sur la surface extérieure du profilé composite.

Ces solutions ont été dimensionnées pour apporter la même raideur axiale à la conduite flexible. Pour chaque solution, les contraintes et le facteur de rupture R des armures sont calculés pour les chargements en tête et en pied de la conduite flexible, à l'aide d'un modèle numérique permettant de prendre en compte complètement le caractère multiaxial des chargements.

La valeur maximale du facteur de rupture R est donnée pour les différentes solutions dans le Tableau 1. Le fil est considéré rompu pour R ≥ 1. Le facteur R est calculé à partir de l'état de contraintes et des limites à rupture dans chaque direction du fil.

**Tableau 1 - facteur de rupture maximal pour les différentes structures d'armure**

| **Armure** | **Rₘₐₓ** |
|---|---|
| Art antérieur : armure unidirectionnelle avec Vf = 68% | 1.33 |
| Exemple 1 | 1.13 |
| Exemple 2 | 0.86 |
| Exemple 3 | 0.80 |

La réduction du taux de fibre réduit largement la valeur de Rmax comparativement à l'exemple de l'armure de l'art antérieur, mais elle reste proche de 1. Cependant, l'utilisation d'un tri-couches, et surtout d'un bi-couches, permet de réduire encore plus la valeur de Rmax et de passer sous 0.9, et par conséquent d'éviter la rupture de l'armure.

Ainsi, le renfort du profilé composite unidirectionnel actuel par des rubans tissés ou plus généralement des tissus permet d'améliorer la résistance transverse de l'armure tout en gardant des propriétés longitudinales satisfaisantes. Notamment, il est possible de renforcer suffisamment l'armure pour éviter les fissures longitudinales.

## Revendications

1. Conduite flexible pour transporter un effluent pétrolier, ladite conduite flexible comportant au moins une gaine de pression (7) et au moins une nappe d'armures de traction (9) comprenant des armures (1), ladite nappe d'armures (9) étant placée à l'extérieur de ladite gaine de pression (7), les armures comportant un profilé composite (2) et au moins un ruban de renfort (5), ledit profilé composite (2) étant constitué de fibres de renfort (4) continues noyées dans une résine polymère (3), ledit profilé composite (2) ayant une section sensiblement rectangulaire, et ledit ruban de renfort (5) étant solidarisé sur au moins une face dudit profilé composite (2), **caractérisé en ce que** ledit ruban de renfort (5) est un ruban tissé comprenant des fibres imprégnées dans un matériau polymère, ledit ruban de renfort (5) étant formé de telle sorte que le fil de trame dudit ruban de renfort (5) est sensiblement perpendiculaire à la direction longitudinale (L) dudit profilé composite (2), et de telle sorte que le fil de chaîne dudit ruban de renfort (5) est sensiblement parallèle à la direction longitudinale (L) dudit profilé composite (2).

2. Conduite flexible selon la revendication 1, dans laquelle de 50 à 90 %, et de préférence de 60 à 80 %, desdites fibres dudit ruban de renfort (5) sont incluses dans ledit fil de chaîne dudit ruban de renfort (5).

3. Conduite flexible selon l'une des revendications précédentes, dans laquelle le taux volumique de fibres dudit ruban de renfort (5) est supérieur à 40 %, et vaut de préférence 60 %.

4. Conduite flexible selon l'une des revendications précédentes, dans laquelle lesdites fibres dudit ruban de renfort (5) sont des fibres de carbone.

5. Conduite flexible selon l'une des revendications précédentes, dans laquelle l'épaisseur dudit ruban de renfort (5) est compris entre 5 et 50 % de l'épaisseur de ladite armure (1), de préférence entre 10 et 30 % de l'épaisseur de ladite armure (1).

6. Conduite flexible selon l'une des revendications précédentes, dans laquelle ladite armure (1) comporte un ruban de renfort (5) disposé sur la face supérieure dudit profilé composite (2).

7. Conduite flexible selon l'une des revendications précédentes, dans laquelle ladite armure (1) comporte deux rubans de renfort (5) disposés sur les faces supérieure et inférieure dudit profilé composite (2).

8. Conduite flexible selon l'une des revendications précédentes, dans laquelle ledit ruban de renfort (5) est solidarisé sur ledit profilé composite (2) par gainage, par collage, ou par stratification simultanée avec ladite résine polymère dudit profilé lors de la fabrication dudit profilé composite (2).

9. Conduite flexible selon l'une des revendications précédentes, dans laquelle ladite armure (1) possède une raideur longitudinale supérieure à 70 % de celle de l'armure unidirectionnelle de référence et de préférence supérieure à 80%.

10. Conduite flexible selon l'une des revendications précédentes, dans laquelle le taux volumique de fibres dudit profilé composite (2) est compris entre 50 et 80 %.

11. Conduite flexible selon l'une des revendications précédentes, dans laquelle lesdites fibres (4) dudit profilé composite (2) sont orientées uniquement selon la direction longitudinale (L) dudit profilé composite (2).

## Patentansprüche

1. Flexible Leitung zum Transportieren eines Erdölabstroms, wobei die flexible Leitung mindestens einen Druckmantel (7) und mindestens eine Zugarmierungslage (9), die Armierungen (1) umfasst, aufweist, wobei die Armierungslage (9) außerhalb des Druckmantels (7) positioniert ist, wobei die Armierungen ein Verbundprofil (2) und mindestens ein Verstärkungsband (5) aufweisen, wobei das Verbundprofil (2) aus durchgehenden Verstärkungsfasern (4) besteht, die in ein Polymerharz (3) eingebettet sind, wobei das Verbundprofil (2) einen im Wesentlichen rechteckigen Querschnitt hat, und wobei das Verstärkungsband (5) auf mindestens einer Seite des Verbundprofils (2) befestigt ist, **dadurch gekennzeichnet, dass** das Verstärkungsband (5) ein gewebtes Band ist, das in einem Polymermaterial imprägnierte Fasern umfasst, wobei das Verstärkungsband (5) so gebildet ist, dass der Schussfaden des Verstärkungsbands (5) im Wesentlichen senkrecht zu der Längsrichtung (L) des Verbundprofils (2) verläuft, und so, dass der Kettfaden des Verstärkungsbands (5) im Wesentlichen parallel zu der Längsrichtung (L) des Verbundprofils (2) verläuft.

2. Flexible Leitung nach Anspruch 1, wobei 50 bis 90 % und bevorzugt 60 bis 80 % der Fasern des Verstärkungsbands (5) in dem Kettfaden des Verstärkungsbands (5) enthalten sind.

3. Flexible Leitung nach einem der vorhergehenden Ansprüche, wobei der volumenbezogene Faseranteil des Verstärkungsbands (5) mehr als 40 % beträgt und bevorzugt 60 % beträgt.

4. Flexible Leitung nach einem der vorhergehenden Ansprüche, wobei die Fasern des Verstärkungsbands (5) Carbonfasern sind.

5. Flexible Leitung nach einem der vorhergehenden Ansprüche, wobei die Dicke des Verstärkungsbands (5) zwischen 5 und 50 % der Dicke der Armierung (1), bevorzugt zwischen 10 und 30 % der Dicke der Armierung (1), beträgt.

6. Flexible Leitung nach einem der vorhergehenden Ansprüche, wobei die Armierung (1) ein Verstärkungsband (5) aufweist, das auf der Oberseite des Verbundprofils (2) angeordnet ist.

7. Flexible Leitung nach einem der vorhergehenden Ansprüche, wobei die Armierung (1) zwei Verstärkungsbänder (5) aufweist, die auf der Ober- und der Unterseite des Verbundprofils (2) angeordnet sind.

8. Flexible Leitung nach einem der vorhergehenden Ansprüche, wobei das Verstärkungsband (5) auf dem Verbundprofil (2) durch Ummantelung, durch Kleben oder durch gleichzeitiges Laminieren mit dem Polymerharz des Profils bei der Herstellung des Verbundprofils (2) befestigt wird.

9. Flexible Leitung nach einem der vorhergehenden Ansprüche, wobei die Armierung (1) eine Längssteifigkeit besitzt, die mehr als 70 % derjenigen der unidirektionalen Referenzarmierung und bevorzugt mehr als 80 % beträgt.

10. Flexible Leitung nach einem der vorhergehenden Ansprüche, wobei der volumenbezogene Faseranteil des Verbundprofils (2) zwischen 50 und 80 % beträgt.

11. Flexible Leitung nach einem der vorhergehenden Ansprüche, wobei die Fasern (4) des Verbundprofils (2) nur entlang der Längsrichtung (L) des Verbundprofils (2) ausgerichtet sind.

## Claims

1. Flexible pipe for transporting a petroleum effluent, said flexible pipe including at least one pressure sheath (7) and at least one tensile armour ply (9) comprising armours (1), said armour ply (9) being placed outside said pressure sheath (7), the armours including a composite profile (2) and at least one reinforcing strip (5), said composite profile (2) being made of continuous reinforcing fibres (4) embedded in a polymer resin (3), said composite profile (2) having a substantially rectangular cross section, and said reinforcing strip (5) being secured to at least one face of said composite profile (2), **characterized in that** said reinforcing strip (5) is a woven strip comprising fibres impregnated in a polymer material, said reinforcing strip (5) being formed such that the weft thread of said reinforcing strip (5) is substantially perpendicular to the longitudinal direction (L) of said composite profile (2), and such that the warp thread of said reinforcing strip (5) is substantially parallel to the longitudinal direction (L) of said composite profile (2).

2. Flexible pipe according to Claim 1, wherein 50% to 90%, and preferably 60% to 80%, of said fibres of said reinforcing strip (5) are included in said warp thread of said reinforcing strip (5).

3. Flexible pipe according to either of the preceding claims, wherein the fibre volume ratio of said reinforcing strip (5) is greater than 40%, and is preferably 60%.

4. Flexible pipe according to one of the preceding claims, wherein said fibres of said reinforcing strip (5) are carbon fibres.

5. Flexible pipe according to one of the preceding claims, wherein the thickness of said reinforcing strip (5) is between 5% and 50% of the thickness of said armour (1), preferably between 10% and 30% of the thickness of said armour (1).

6. Flexible pipe according to one of the preceding claims, wherein said armour (1) comprises a reinforcing strip (5) arranged on the upper face of said composite profile (2).

7. Flexible pipe according to one of the preceding claims, wherein said armour (1) comprises two reinforcing strips (5) arranged on the upper and lower faces of said composite profile (2).

8. Flexible pipe according to one of the preceding claims, wherein said reinforcing strip (5) is secured to said composite profile (2) by sheathing, by bonding or by simultaneous lamination with said polymer resin of said profile during the manufacture of said composite profile (2).

9. Flexible pipe according to one of the preceding claims, wherein said armour (1) has a longitudinal stiffness greater than 70% of the longitudinal stiffness of the reference unidirectional armour, and preferably greater than 80%.

10. Flexible pipe according to one of the preceding claims, wherein the fibre volume ratio of said composite profile (2) is between 50% and 80%.

11. Flexible pipe according to one of the preceding claims, wherein said fibres (4) of said composite profile (2) are oriented only in the longitudinal direction (L) of said composite profile (2).
